# EUROPEAN PATENT APPLICATION

(11) **EP 4 192 031 A1**
(43) Date of publication of application: **07.06.2023**
(21) Application number: 21212290.7
(22) Date of filing: 03.12.2021
(51) Int. Cl.: H04R 3/00, H04N 21/439, H04M 9/08, G06F 3/16, H04M 3/56, H04R 1/40, G10K 11/175

(54) **AUDIO PROCESSING**

(71) Applicant: Nokia Technologies Oy, 02610 Espoo (FI)
(72) Inventor: LEHTINIEMI, Arto Juhani, 33880 Lempäälä (FI); VILERMO, Miikka Tapani, 37200 Siuro (FI); TAMMI, Mikko Tapio, 33310 Tampere (FI)
(74) Representative: Nokia EPO representatives

(57) **Abstract**

An apparatus and method for audio processing is disclosed. For example, the apparatus may comprise means for: providing a first audio signal captured by a first capture device, the first audio signal comprising one or more first sounds emitted by a first audio source associated with the first capture device; determining enablement of a mute function associated with a second capture device in proximity of the first capture device, the second capture device being associated with a second audio source; and responsive to the determination of the mute function being enabled, filtering the first audio signal to attenuate or remove one or more second sounds emitted by the second audio source, the one or more second sounds also being comprised in the first audio signal.

## Description

### Field

Example embodiments may relate to audio processing, for example audio processing for filtering sounds from a first audio signal transmitted by a first capture device, associated with a first user, to another device such as a teleconference server. For example, the filtered sounds may be emitted by an audio source, e.g. a second user, associated with a different capture device which is proximate the first capture device and which has been muted.

### Background

Teleconferencing systems allow users to participate in audio and/or video meetings, or sessions using one or more capture devices. Sometimes, users to a teleconference session may be in proximity, e.g. they may be in the same room. On occasion, one user may mute their capture device to prevent unintended audio, for example a private conversation or a cough or sneeze, from being communicated as part of the teleconference session. However, the unintended audio may still be captured by other proximate capture devices associated with the same teleconference session.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus comprising means for: providing a first audio signal captured by a first capture device, the first audio signal comprising one or more first sounds emitted by a first audio source associated with the first capture device; determining enablement of a mute function associated with a second capture device in proximity of the first capture device, the second capture device being associated with a second audio source; and responsive to the determination of the mute function being enabled, filtering the first audio signal to attenuate or remove one or more second sounds emitted by the second audio source, the one or more second sounds also being comprised in the first audio signal.

The apparatus may comprise means for receiving the first audio signal from the first capture device and means for receiving a second audio signal from the second capture device, the second audio signal comprising the one or more second sounds emitted by the second audio source, wherein the filtering means may be configured, based on identification of the one or more second sounds in the second audio signal, to filter the first audio signal to attenuate or remove the one or more second sounds from the first audio signal.

The apparatus may further comprise means for identifying the one or more second sounds in the first audio signal as sounds that are present in both the received first and second audio signals and in which said sounds have greater volume in the second audio signal.

The received second audio signal may be a pre-filtered audio signal providing the one or more second sounds as a subset of one or more sounds captured by the second capture device, the pre-filtering being based on characteristics of said subset of sounds. The received second audio signal may be pre-filtered to provide one or more second sounds which correspond to one or more voice sounds. The second audio source may, for example, be a particular user and the received second audio signal may be pre-filtered to provide one or more second sounds which correspond to the particular user.

The second audio signal may be received in response to a trigger condition being detected at the second capture device based on one or more characteristics of the one or more second sounds captured by the second capture device. The trigger condition may be detected in the event of one or more of: the one or more second sounds captured by the second capture device exceeding a predetermined volume; or the one or more second sounds captured by the second capture device meeting one or more predetermined classification conditions.

The apparatus may comprise a teleconference or videoconference server for communication with the first and second capture devices.

The first audio signal may be captured by a plurality of microphones, a first set of the microphones being associated with a direction of the first audio source and a second set of the microphones being associated with a direction of the second audio source, wherein the filtering means may be configured to filter the first audio signal by disabling the second set of microphones or attenuating or removing sounds captured by the second set of microphones.

The apparatus may further comprise means for estimating the direction of the second audio source relative to respective positions of the plurality of microphones in order to determine the second set of microphones.

The apparatus may further comprise means for receiving position data associated with the second capture device, the direction estimating means being configured to estimate the direction of the second audio source relative to the respective positions of the plurality of microphones based on the received position data.

The position data associated with the second capture device may comprise a position and orientation of the second capture device.

The apparatus may comprise the first capture device.

The means for receiving the position data may be configured to receive the position data from a teleconference or videoconference server.

The apparatus may further comprise means for determining that the second capture device is in proximity of the first capture device based on one or more of: a distance between the first and second capture devices, determined using respective position data of the first and second capture devices, being within a predetermined value; an established short-range communications link between the first and second capture devices; and one or more proximity sensors of the first and/or second capture devices indicating that said capture devices are in proximity.

The apparatus may further comprise means for causing display of an indicator on the second capture device indicative of the filtering performed on the first audio signal.

The first and second capture devices may each comprise a mobile user terminal.

The filtering means may be further configured to perform filtering of the first audio signal responsive to detecting that both the first and second capture devices are engaged in a common teleconference or videoconference.

A plurality of first audio signals may be provided, respectively associated with different first audio sources and different first capture devices, wherein the filtering means may be configured to filter the first audio signals.

According to a second aspect, there is described a method comprising: providing a first audio signal captured by a first capture device, the first audio signal comprising one or more first sounds emitted by a first audio source associated with the first capture device; determining enablement of a mute function associated with a second capture device in proximity of the first capture device, the second capture device being associated with a second audio source; and responsive to the determination of the mute function being enabled, filtering the first audio signal to attenuate or remove one or more second sounds emitted by the second audio source, the one or more second sounds also being comprised in the first audio signal.

According to a third aspect, there is provided a computer program product comprising a set of instructions which, when executed on an apparatus, is configured to cause the apparatus to carry out the method of any preceding method definition.

According to a fourth aspect, there is provided a non-transitory computer readable medium comprising program instructions stored thereon for performing a method, comprising: providing a first audio signal captured by a first capture device, the first audio signal comprising one or more first sounds emitted by a first audio source associated with the first capture device; determining enablement of a mute function associated with a second capture device in proximity of the first capture device, the second capture device being associated with a second audio source; and responsive to the determination of the mute function being enabled, filtering the first audio signal to attenuate or remove one or more second sounds emitted by the second audio source, the one or more second sounds also being comprised in the first audio signal.

The program instructions of the fourth aspect may also perform operations according to any preceding method definition of the second aspect.

According to a fifth aspect, there is provided an apparatus comprising: at least one processor; and at least one memory including computer program code which, when executed by the at least one processor, causes the apparatus to: provide a first audio signal captured by a first capture device, the first audio signal comprising one or more first sounds emitted by a first audio source associated with the first capture device; determine enablement of a mute function associated with a second capture device in proximity of the first capture device, the second capture device being associated with a second audio source; and responsive to the determination of the mute function being enabled, filter the first audio signal to attenuate or remove one or more second sounds emitted by the second audio source, the one or more second sounds also being comprised in the first audio signal.

The computer program code of the fifth aspect may also perform operations according to any preceding method definition of the second aspect.

### Brief Description of Drawings

Example embodiments will now be described by way of non-limiting example, with reference to the accompanying drawings, in which:
FIG. 1 is a schematic view of a teleconferencing system which may be useful for understanding example embodiments;
FIG. 2 is perspective view of an example scenario which may be useful for understanding example embodiments;
FIG. 3 is a block diagram of a system in accordance with example embodiments;
FIG. 4 is a flowchart showing processing operations in accordance with example embodiments;
FIG. 5 is a block diagram of a system in accordance with a first particular example embodiment;
FIG. 6 is flowchart of processing operations in accordance with the first particular example embodiment;
FIG. 7 is a block diagram of a system in accordance with a second particular example embodiment;
FIG. 8 is flowchart of processing operations in accordance with the second particular example embodiment;
FIGs. 9A, 9B, and 9C are schematic views of a graphical user interface in accordance with some example embodiments;
FIG. 10 is a schematic view of an apparatus in which example embodiments may be embodied; and
FIG. 11 is a plan view of a non-transitory medium which may store computer-readable code for causing an apparatus, such as the FIG. 10 apparatus, to perform operations according to example embodiments.

### Detailed Description

Example embodiments may relate to audio processing, for example audio processing for filtering sounds from a first audio signal transmitted by a first capture device, associated with a first user (as an example of a first audio source) to another device such as a teleconference server or videoconference server. The former will be assumed herein. The filtered sounds may be those emitted by a second user (as an example of a second audio source) associated with a different, second capture device which is proximate the first capture device and which has been muted.

As may be appreciated, by muting the second capture device, the second user intends for their emitted sounds, such as their voice, not to be part of a teleconference session hosted by the teleconference server. These sounds may, for example, relate to a private conversation or other utterance such as a cough or sneeze. However, proximity between the first and second capture devices may mean that there is leakage of sounds emitted by the second user to what is being captured by the first capture device, and hence such sounds may be heard by all other users of the same teleconference session, even those remote from the first and second users.

As used herein, a teleconference session may be a communications session that involves two or more users and which may be hosted by a teleconference server. Some users may be remote from one another and some may be close to one another, e.g. in audible proximity. The teleconference session may include audio and/or video communications. In the case of audio communications, audio data may be captured by one or more capture devices, examples of which are given below. In the case of video communications, video data may also be captured by one or more capture devices, which may or may not be the same capture devices that captured the audio data.

Example embodiments focus mainly on audio data capture and hence capture devices are considered devices comprising one or more microphones for capturing sounds and generating audio signals for processing and/or transmission to other devices.

A capture device may comprise, but is not limited to, a mobile user terminal such as a smartphone, a personal computer, a tablet computer, a digital assistant, a headset, a pair of earphones/earbuds, a webcam or a wearable device (e.g. smartwatch). It will be appreciated that at least some of these examples may also comprise cameras for video data capture.

In terms of data communications, such capture devices may be configured to transmit and receive data with other devices, either directly, or indirectly via a communications network. For example, data communications may be by means of wirelessly transmitting and receiving signals via a radio access network (RAN) access point, e.g. a base station, an internet access point using a protocol such as WiFi, or by means of direct communications using a short-range protocol such as Bluetooth or Zigbee. Such capture devices may also comprise one or more memories for storing captured audio signals and may comprise one or more processors for processing captured audio signals. Capture devices may store and run an operating system which may typically manage computer hardware and software resources and provide common services for computer programs.

As described herein, audio signals may be streamed using one or more data formats which may comprise, but are not limited to, MP3, MIDI, WAV and others.

In example embodiments, capture devices may comprise a mute function which may be manually enabled by a user, usually via the user selecting a mute button displayed on a graphical user interface (GUI) presented by a display of the capture device and/or by the user sliding a volume control to its minimum value. Alternatively, or additionally, some capture devices provide a physical mute button or switch. Alternatively, or additionally, the mute function can be enabled using a voice command. Enabling the mute function may prevent sounds from being captured by one or more microphones of the particular capture device, e.g. by disabling the microphones, or sounds may be captured and processed in some way to attenuate them (reducing the amplitude to zero or nearly zero.)

During a teleconference session, a user may enable the mute function on their capture device to prevent sounds, e.g. their voice, being included in an ongoing teleconference session. However, if the capture device is in close proximity with one or more other capture devices (e.g. associated with other users) that are connected to the same teleconference session, at least some part of the participant's audio may be captured by one or more of the other capture devices and sent as part of the respective audio signals transmitted by those other capture devices. This effect may be referred to as "audio leakage" which may be distracting and/ or may compromise the privacy of the "muted" user.

Capture devices and audio codecs are continually improving audio capture capabilities, and are often capable of feature-rich spatial capture which may cause more significant audio leakage.

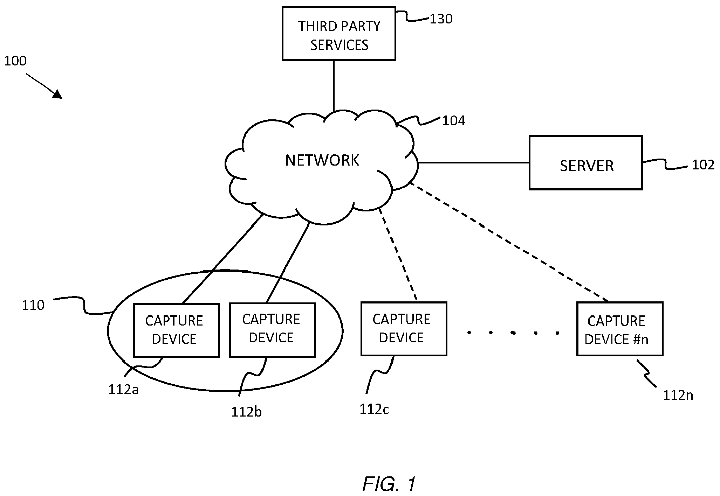

FIG. 1 shows a schematic view of a system, indicated generally by reference numeral 100 which is useful for understanding example embodiments. The system 100 may be a teleconference system comprising at least one server 102, such as a teleconference server, a plurality of capture devices 112a - 112n, and a communications network 104. The system 100 may further comprise one or more third party services 130. In an example, two or more capture devices, such as first and second capture devices 112a, 112b may be co-located, i.e. they are in proximity to one another. A proximate status may be determined by any known means, some of which are described below.

For example, the first and second capture devices 112a, 112b may be within the same physical room 110 and participating in the same teleconference session. The one or more other capture devices 112c to 112n may also be party to the same teleconference session but may be remote from the first and second capture devices 112a, 112b. The capture devices 112a - 112n participating in the teleconference session may each send / stream respective audio signals to the server 102 which may relay them in a teleconference stream to the other capture devices for output in the conventional manner.

The server 102 may manage one or more aspects of the teleconference session. The server 102 may, for example, receive status data from one or more of the capture devices 112a - 112n indicating a state of the respective device(s). For example, the server 102 may receive an indication of enablement of a mute function, e.g. a user has selected a "mute" function, associated with a particular one of the capture devices 112a - 112n at a given time. The server 102 may also store and manage other teleconference settings specific to the one or more capture devices 112a - 112n.

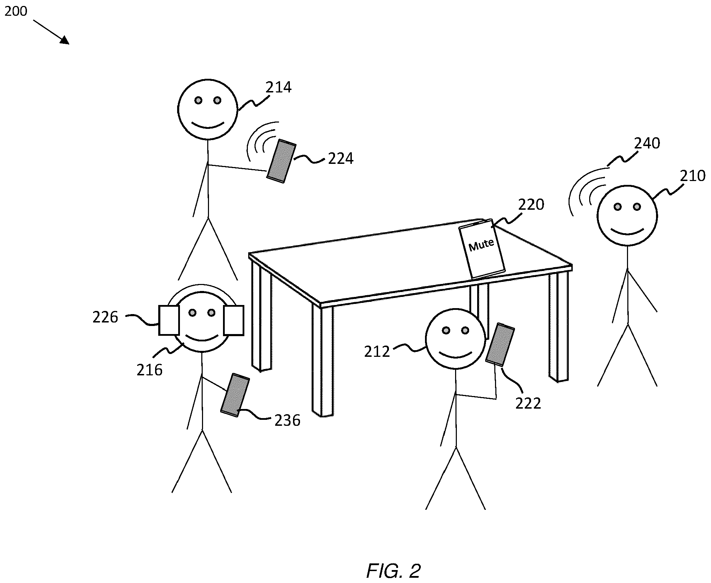

FIG. 2 is a perspective view of an example scenario, indicated by reference numeral 200, which is also useful for understanding example embodiments. A plurality of capture devices, including first to fourth capture devices 220, 222, 224, 226 are shown located in close proximity to one other (e.g. in the same geographical area, such as in the same workplace or room.) The first to fourth capture devices 220, 222, 224, 226 may be participating in the same teleconference session. The first capture device 220 may comprise a smartphone that is operated in "speaker" mode. The second capture device 222 may comprise a smartphone used in a conventional mode and held close to the user's head. The third capture device 224 may comprise a smartphone that is also operated in speaker mode. The fourth capture device 226 may be an accessory which is paired with a smartphone 236, the accessory being, for example, a pair of headphones or earphones comprising one or more microphones which transmit captured audio signals to the smartphone.

Each of the first to fourth capture devices 220, 222, 224, 226 may be associated with respective audio sources, for example first to fourth users 210, 212, 214, 216. The first to fourth capture devices 220, 222, 224, 226 may communicate, either directly or indirectly, with a conference server, such as the server 102 shown in FIG. 1 via the communications network 104.

In use, the first to fourth users 210, 212, 214, 216 may emit sounds (e.g. speech or other utterances) which may be captured by one or more of the first to fourth capture devices 220, 222, 224, 226. As such, and given their proximities, it is likely that at least some of the sounds emitted by, for example, the first user 210 associated with the first capture device 220 may be captured by any one of the other second to fourth capture devices 222, 224, 226. As such, if one of the users, e.g. the first user 210, operates the first capture device 220 to enable a mute function, sounds emitted by the first user may still be captured (at least in part) by one or more of the second to fourth capture devices 222, 224, 226 despite the clear intention of the first user to prevent this happening. This may mean that part of a confidential discussion intended not to form part of the teleconference session, or another utterance such as a cough or sneeze, may leak into the teleconference session and be heard not only by the second to fourth users 212, 214, 216 but other remote users participating in the same teleconference session.

Example embodiments described below seek to address such issues of audio leakage.

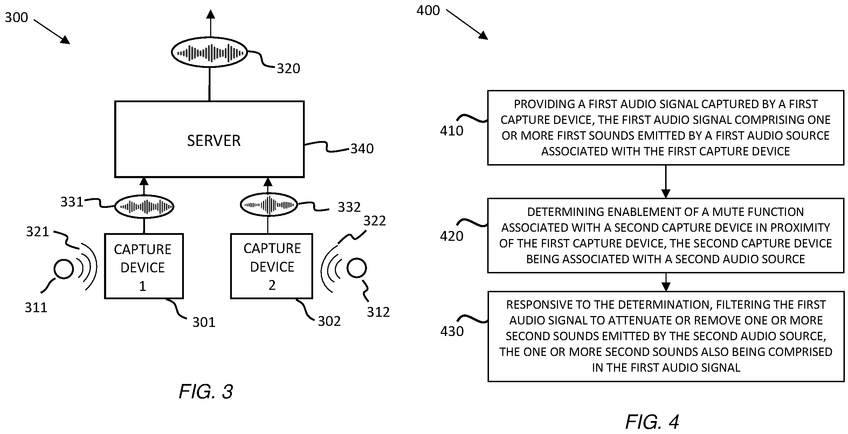

FIG. 3 is a block diagram of a system, indicated generally by reference numeral 300, in accordance with example embodiments.

The system 300 may comprise at least a first capture device 301 and a second capture device 302. The first capture device 301 and the second capture device 302, which may comprise any two of the first to fourth capture devices 220, 222, 224, 226 described with reference to FIG. 2, may be in proximity with one another. The first capture device 301 may capture one or more first sounds 321 emitted by a first audio source 311, e.g. a first user, associated with the first capture device. The second capture device 302 may capture one or more second sounds 322 emitted by a second audio source 312, e.g. a second user, associated with the second capture device. The first capture device 301 may transmit a first audio signal 331 to the server 340. Similarly, the second capture device 302 may transmit a second audio signal 332 to the server 340. The server 340 may in turn process and/or provide a teleconference signal 320 comprising at least a combination of both the first and audio signals 331, 332 for transmission to other capture devices (including some that are not shown) which are party to the same teleconference.

In the event that one of the first and second capture devices 301, 302 are muted, one or more audio processing operations may follow. For ease of explanation, example embodiments will assume that the second capture device 302 is muted.

FIG. 4 is a flowchart of processing operations, indicated generally by the reference numeral 400, in accordance with example embodiments. The processing operations 400 may be performed by hardware, software, firmware or a combination thereof. FIG. 4 may be viewed in conjunction with FIG. 3 for ease of explanation, in which it is assumed that the second capture device 302 is controlled by an associated user to enable the mute function.

A first operation 410 may comprise providing a first audio signal 331 captured by a first capture device 301, the first audio signal comprising one or more first sounds 321 emitted by a first audio source 311 associated with the first capture device.

A second operation 420 may comprise determining enablement of a mute function associated with a second capture device 302 in proximity of the first capture device 301, the second capture device 302 being associated with a second audio source 312.

A third operation 430 may comprise, responsive to the determination of the second operation 420, filtering the first audio signal 320 to attenuate or remove one or more second sounds 322 emitted by the second audio source 312, the one or more second sounds 322 also being comprised in the first audio signal 320.

As will be appreciated from the foregoing, the first and second audio sources 311, 312 may comprise respective first and second users associated with the first and second capture devices 301, 302. By "associated" it may be meant that the first and second audio sources (e.g. users) are closest in terms of physical distance to the respective first and second capture devices 301, 302 and/or are the users /owners of those capture devices.

In embodiments, there may be multiple first audio sources and/or multiple second audio sources respectively associated with the first and/or second capture devices 301, 302. For example, there may be multiple second audio sources associated with the second capture device 302, e.g. a teleconference hub, the second audio sources emitting respective second sounds, e.g. their voices. The third operation 430, in this case, may comprise filtering the first audio signal 320 to attenuate the respective sounds emitted by the multiple second audio sources.

As will also be appreciated, the third operation 430 may be performed in relation to multiple "first audio signals" if a plurality of non-muted capture devices are in proximity to the muted second capture device 302.

In some example embodiments, the processing operations 400 may be performed at the server 340 or an associated device. In other example embodiments, the processing operations 400 may be performed at the first capture device 301 or some other capture device other than the one that has the mute function enabled. More specific examples will follow.

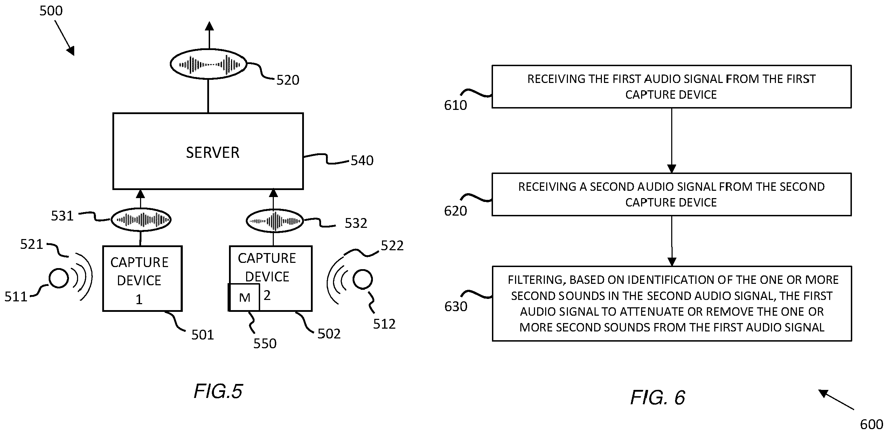

Referring now to FIG. 5, a more detailed example will be described.

FIG. 5 is a block diagram of a system, similar to that shown and described with reference to FIG. 3 and indicated generally by reference numeral 500.

The system 500 may comprise at least a first capture device 501 and a second capture device 502. The first capture device 501 and the second capture device 502, which may comprise any two of the first to fourth capture devices 220, 222, 224, 226 described with reference to FIG. 2, may be in proximity with one another. The first capture device 501 may capture one or more first sounds 521 emitted by a first audio source 511, e.g. a first user associated with the first capture device. The second capture device 502 may capture one or more second sounds 522 emitted by a second audio source 512, e.g. a second user associated with the second capture device. The first capture device 501 may transmit a first audio signal 531 to a server 540. Similarly, the second capture device 502 may transmit a second audio signal 532 to the server 540. The server 540 may in turn process and/or provide a teleconference signal 520 comprising at least a combination of both the first and audio signals 331, 332 for transmission to other capture devices (not shown) which are party to the same teleconference session.

In this case, if the second capture device 502 is muted by user action or otherwise, as denoted by the "M" symbol 550 on the second capture device, the following processing operations may follow, as described with reference to FIG. 6. FIG. 6 is a flowchart showing processing operations generally indicated by reference numeral 600 and which may be performed by hardware, software, firmware or a combination thereof. The processing operations 600 may, for example, be performed at the server 540, for example responsive to determining enablement of the mute function in the second operation 420 mentioned above.

A first operation 610 may comprise receiving the first audio signal 531 from the first capture device 501.

A second operation 620 may comprise receiving a second audio signal 532 from the second capture device 502, the second audio signal comprising one or more second sounds 522 emitted by the second audio source 512. The first and second operations 610, 620 maybe performed in parallel or in sequential order.

A third operation 630 may comprise, based on identification of the one or more second sounds 522 in the second audio signal 532, filtering the first audio signal 531 to attenuate or remove the one or more second sounds from the first audio signal.

Therefore, in this example embodiment, despite an enabled mute function being associated with the second capture device 502, the second audio signal 532 is nevertheless captured and received therefrom in order to, by means of audio processing operations, identify at least some of the second sounds 522 that are to be filtered from the first audio signal 331, the filtering for example being performed at the server 540.

In terms of identifying the one or more second sounds 522 in the second audio signal 532 to filter from the first audio signal 531, a further operation may comprise identifying sounds that are present in both the received first and second audio signals 531, 532 and in which said sounds have greater volume in the second audio signal. This is one feasible way of identifying the one or more second sounds to be filtered, because the second audio source 512 is very likely closest to his or her associated second capture device 502 and hence, despite any audio corresponding to the second sound leaking to the first capture device 501 and therefore the first audio signal 531, the second sounds will be louder in the second audio signal and hence can be identified.

In some example embodiments, the received second audio signal 532 may be pre-filtered to provide the one or more second sounds 522 as a subset of one or more sounds captured by the second capture device 502, the pre-filtering being based on characteristics of said subset of sounds. For example, the received second audio signal 532 may be pre-filtered to provide the one or more second sounds which correspond to a voice sound, or one or more voice sounds if there are multiple second users, as one example of a dominant sound of interest. For example, the second audio source 512 may be a particular user and the received second audio signal 532 may be pre-filtered to provide a subset of the one or more sounds which correspond to the particular user's voice. In some embodiments, known algorithms and techniques for so-called sound source separation may be used, in which, based on a model (which may be a trained computational model), it may be possible to identify audio components having certain predefined characteristics which can be isolated from other audio components. So, if a model is provided corresponding to a user's voice as the second audio source 512, it may be possible to isolate audio components and provide these as the one or more second sounds to the server 540.

In some example embodiments, the second audio signal 532 may be received in response to a trigger condition being detected at the second capture device 502 based on one or more characteristics of the one or more second sounds 522 captured by the second capture device. The one or more characteristics may comprise any predetermined characteristic or combination of characteristics. Only when the one or more characteristics or combination of characteristics are detected by the second capture device 502 may the second audio signal 532 be transmitted to the server 540.

For example, a trigger condition may be detected in the event of one or more of: the one or more second sounds 522 captured by the second capture device 502 exceeding a predetermined volume, and the one or more second sounds captured by the second capture device meeting one or more predetermined classification conditions. The one or more predetermined classification conditions may comprise detecting utterances or sounds of a predetermined type, which may use one or more trained computational models. For example, the utterances or sounds of a predetermined type may correspond to speech, speech from a particular user and/or coughing, sneezing or similar.

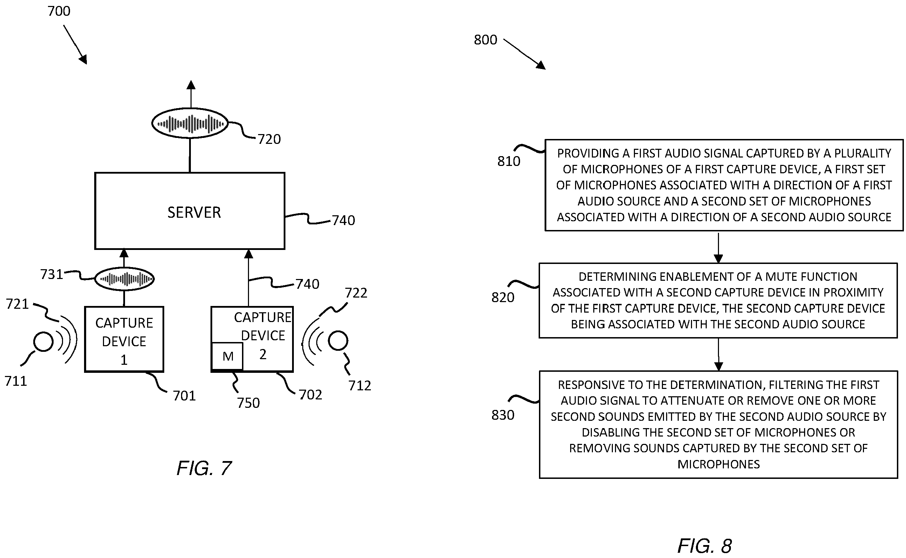

Referring now to FIG. 7, another more detailed example will be described in accordance with some example embodiments.

FIG. 7 is a block diagram of a system, similar to that shown and described with reference to FIGs. 3 and 5 and indicated generally by reference numeral 700.

The system 700 may comprise at least a first capture device 701 and a second capture device 702. The first capture device 701 and the second capture device 702, which may comprise any two of the first to fourth capture devices 220, 222, 224, 226 described with reference to FIG. 2, may be in proximity with one another. The first capture device 701 may capture one or more first sounds 721 emitted by a first audio source 711, e.g. a first user, associated with the first capture device. The second capture device 702 may capture one or more second sounds 722 emitted by a second audio source 712, e.g. a second user, associated with the second capture device. The first capture device 701 may transmit a first audio signal 731 to a server 740. Similarly, the second capture device 702 may transmit a second audio signal (not shown) to the server 540 when no mute function is enabled by the second capture device, but, in this case, no second signal may be transmitted when the mute function is so enabled. Rather, the second capture device 702 may transmit one or more status signals or messages to the server 740 indicative of the mute function and also data usable by the server for determining the position of the second capture device in relation to the first capture device 701.

In this case, if the second capture device 702 is muted, as denoted by the "M" symbol 750 on the second capture device, the following processing operations may follow, as described with reference to FIG. 8 in conjunction with FIG. 7.

FIG. 8 is a flowchart showing processing operations generally indicated by reference numeral 800 and which may be performed by hardware, software, firmware or a combination thereof. The processing operations 800 may, for example, be performed at the first capture device 701 or any other capture device (not shown) in proximity of the second capture device 702.

A first operation 8 10 may comprise providing a first audio signal 731 captured by a plurality of microphones of a first capture device 701, a first set of the microphones being associated with a direction of a first audio source 711 and a second set of the microphones being associated with a direction of a second audio source 712.

A second operation 820 may comprise determining enablement of a mute function associated with a second capture device 702 in proximity of the first capture device 701, the second capture device being associated with the second audio source 712.

A third operation 830 may comprise, responsive to the determination, filtering the first audio signal to attenuate or remove one or more second sounds emitted by the second audio source by disabling the second set of microphones or attenuating or removing sounds captured by the second set of microphones of the first capture device 701.

In such an embodiment, no second audio signal needs to be transmitted to the server 740 as indicated in FIG. 7. Rather, all that is needed is data indicative of a mute function being enabled and data for identifying the second set of microphones as mentioned above. For example, if the first capture device 701 comprises a plurality of microphones for spatial audio capture or similar, e.g. distributed around the first capture device 701, then the plurality of microphones can be conceptually divided into one or more sets based on their respective directions. Each set of microphones may comprise just one (or more) microphone(s). All that the first capture device 701 requires is some way of determining which of the sets of microphones to disable and/or the sounds from which to attenuate or remove.

One method is to estimate the direction of the second audio source 712 relative to the respective positions of the plurality of microphones of the first capture device 701 in order to determine the second set of microphones. This may be based on the position of the second capture device 702 relative to the first capture device 701. For example, position data associated with the second capture device 702 may be received from the server 740 (or, as an alternative, directly from the second capture device), the position data being usable to estimate the direction of the second capture device relative to the respective positions of the plurality of microphones of the first capture device 701. In this respect, if the position of the first capture device 701 is itself known, and the respective positions of the sets of microphones on the first capture device are known, then the relative direction can be estimated. The position data associated with the second capture device 702 may comprise, or be resolvable to provide, a position and orientation of the second capture device.

The position data of the second capture device 702 (and possibly the position of the first capture device 701) may be based on using one or more Global Navigation Satellite Signals (GNNS), signals from one or more accelerometers / gyroscopes, direction-of-arrival (DoA) analysis, Ultra-Wideband (UWB) positioning methods, amongst others.

In some example embodiments, a second audio signal (not shown in FIG. 7) may be transmitted in the same manner of the FIG. 5 example, in the event that filtering based on the relative position of the second capture device 702 does not remove the one or more second sounds to a predetermined degree. For example, the first capture device 701 may analyse the result of the filtering and make a determination that the earlier method should be employed to provide an additional level of filtering based on analysis of both first and second audio signals. The first capture device 701 may send a trigger signal to the second capture device 702, either directly or via the server 740, to cause generation and sending of a second audio signal as in the FIG. 5 example.

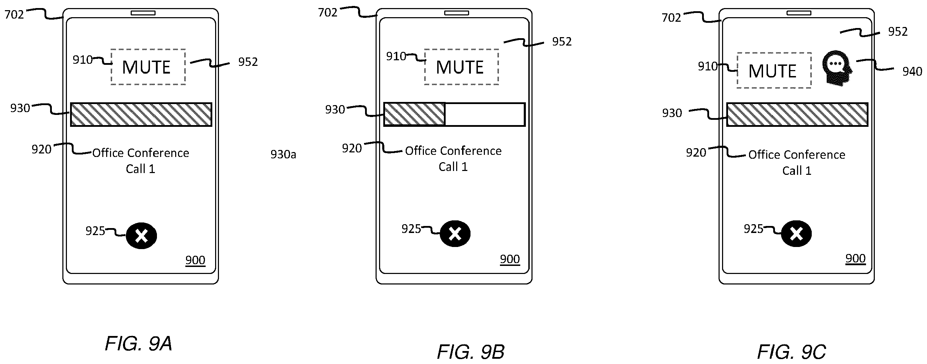

FIGs. 9A, 9B, and 9C are schematic views of respective states of a GUI 900 that may be displayed by a capture device in the example embodiments described above, for example by the second capture device 702 shown in FIG. 7 which has the mute condition enabled.

In general, the GUI may indicate a dynamic "state of muting" in the described use cases.

The GUI 900 may comprise a first element 910 indicating that the second capture device 702 is associated with a mute condition, i.e. it is muted. A second element 920 may indicate details of the teleconference (e.g. 'office conference call 1') and a third element 925 may enable the user, via selection thereof, to leave a current teleconference session. The GUI 900 may further comprise an indicator 930 dynamically indicative of the filtering being performed on the first audio signal, e.g. during the operations 430, 630 or 830 described above. In one example, the indicator 930 may show the level of filtering, e.g. the extent to which the one or more second sounds are being attenuated from the first audio signal.

For example, with reference to FIG. 9A, the indicator 930 may indicate that the one or more second sounds are fully filtered or attenuated from the first audio signal. With reference to FIG. 9B, the indicator 930 may indicate that the one or more second sounds are only partially filtered or attenuated, and hence some of the second sounds may be leaking into the first audio signal. This may prompt the user of the second capture device 702 to, for example, change the position/orientation of the second capture device and/or move away from the first capture device 701. With reference to FIG. 9C, the indicator 930 may indicate that the one or more second sounds are again fully filtered or attenuated from the first audio signal. An element 940 may also be shown as part of the GUI 900 for indicating that a trigger condition has been detected, as described previously. Thus, the element 940 may further indicate that the one or more second sounds are being sent in a second audio signal to the server 740 in response to the trigger being detected.

In terms of determining that two or more capture devices, e.g. the first and second capture devices described in any of the above embodiments, are in proximity, known methods be employed. For example, proximity detection methods may involve one or more of (i) a distance between the first and second capture devices, determined using respective position data of the first and second capture devices (e.g. using GNSS signals), being within a predetermined range; (ii) use of an established short-range communications link between the first and second capture devices, e.g. using Bluetooth or Zigbee; and use of signals from one or more proximity sensors of the first and/or second capture devices indicating that said capture devices are proximate to one another. Proximity sensors may include one or more cameras.

Example embodiments may therefore provide a way of filtering unwanted sounds from audio signals, responsive to a mute condition associated with a capture device which is proximate to one or more other capture devices which are part of a common teleconference session. It will be appreciated that example embodiments are applicable also to scenarios where two or more capture devices are muted at the same time and/or where more than one non-muted capture device is in the vicinity of a muted capture device.

### Example Apparatus

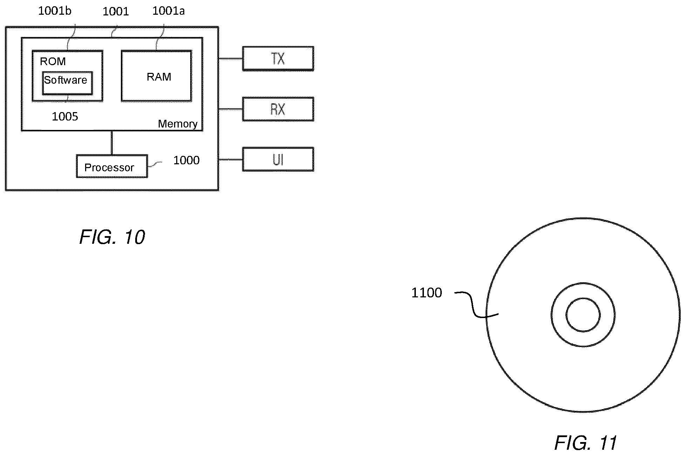

FIG. 10 shows an apparatus according to some example embodiments. The apparatus may be configured to perform the operations described herein, for example operations described with reference to any disclosed process. The apparatus comprises at least one processor 1000 and at least one memory 1001 directly or closely connected to the processor. The memory 1001 includes at least one random access memory (RAM) 1001a and at least one read-only memory (ROM) 1001b. Computer program code (software) 1005 is stored in the ROM 1001b. The apparatus may be connected to a transmitter (TX) and a receiver (RX). The apparatus may, optionally, be connected with a user interface (UI) for instructing the apparatus and/or for outputting data. The at least one processor 1000, with the at least one memory 1001 and the computer program code 1005 are arranged to cause the apparatus to at least perform at least the method according to any preceding process, for example as disclosed in relation to the flow diagrams of any one of FIGs. 4, 6 and 8, and related features thereof.

FIG. 11 shows a non-transitory media 1100 according to some embodiments. The non-transitory media 1100 is a computer readable storage medium. It may be e.g. a CD, a DVD, a USB stick, a blu-ray disk, etc. The non-transitory media 1100 stores computer program code, causing an apparatus to perform the method of any preceding process for example as disclosed in relation to the flow diagrams of any one of FIGs. 4, 6 and 8, and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G networks and further generations of 3GPP but also in non-3GPP radio networks such as WiFi.

A memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud. Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus, comprising means for:
providing a first audio signal captured by a first capture device, the first audio signal comprising one or more first sounds emitted by a first audio source associated with the first capture device;
determining enablement of a mute function associated with a second capture device in proximity of the first capture device, the second capture device being associated with a second audio source; and
responsive to the determination of the mute function being enabled, filtering the first audio signal to attenuate or remove one or more second sounds emitted by the second audio source, the one or more second sounds also being comprised in the first audio signal.

2. The apparatus of claim 1, comprising means for receiving the first audio signal from the first capture device and means for receiving a second audio signal from the second capture device, the second audio signal comprising the one or more second sounds emitted by the second audio source, wherein the filtering means is configured, based on identification of the one or more second sounds in the second audio signal, to filter the first audio signal to attenuate or remove the one or more second sounds from the first audio signal.

3. The apparatus of claim 2, further comprising means for identifying the one or more second sounds in the first audio signal as sounds that are present in both the received first and second audio signals and in which said sounds have greater volume in the second audio signal.

4. The apparatus of claim 3, wherein the received second audio signal is a pre-filtered audio signal providing the one or more second sounds as a subset of one or more sounds captured by the second capture device, the pre-filtering being based on characteristics of said subset of sounds.

5. The apparatus of claim 4, wherein the received second audio signal is pre-filtered to provide one or more second sounds which correspond to one or more voice sounds.

6. The apparatus of claim 5, wherein the second audio source is a particular user and the received second audio signal is pre-filtered to provide one or more second sounds which correspond to the particular user.

7. The apparatus of any of claims 2-6, wherein the second audio signal is received in response to a trigger condition being detected at the second capture device based on one or more characteristics of the one or more second sounds captured by the second capture device.

8. The apparatus of claim 7, wherein the trigger condition is detected in the event of one or more of:
the one or more second sounds captured by the second capture device exceeding a predetermined volume; or
the one or more second sounds captured by the second capture device meeting one or more predetermined classification conditions.

9. The apparatus of any preceding claim, wherein the apparatus comprises a teleconference or videoconference server for communication with the first and second capture devices.

10. The apparatus of claim 1, wherein the first audio signal is captured by a plurality of microphones, a first set of the microphones being associated with a direction of the first audio source and a second set of the microphones being associated with a direction of the second audio source, wherein the filtering means is configured to filter the first audio signal by disabling the second set of microphones or attenuating or removing sounds captured by the second set of microphones.

11. The apparatus of any preceding claim, further comprising means for determining that the second capture device is in proximity of the first capture device based on one or more of:
a distance between the first and second capture devices, determined using respective position data of the first and second capture devices, being within a predetermined value;
an established short-range communications link between the first and second capture devices; and
one or more proximity sensors of the first and/or second capture devices indicating that said capture devices are in proximity.

12. The apparatus of any preceding claim further comprising means for causing display of an indicator on the second capture device indicative of the filtering performed on the first audio signal.

13. The apparatus of any preceding claim, wherein the first and second capture devices each comprise a mobile user terminal.

14. The apparatus of any preceding claim, wherein the filtering means is further configured to perform filtering of the first audio signal responsive to detecting that both the first and second capture devices are engaged in a common teleconference or videoconference.

15. A method, comprising:
providing a first audio signal captured by a first capture device, the first audio signal comprising one or more first sounds emitted by a first audio source associated with the first capture device;
determining enablement of a mute function associated with a second capture device in proximity of the first capture device, the second capture device being associated with a second audio source; and
responsive to the determination of the mute function being enabled, filtering the first audio signal to attenuate or remove one or more second sounds emitted by the second audio source, the one or more second sounds also being comprised in the first audio signal.
